# DEMANDE DE BREVET EUROPEEN

(11) **EP 0 928 970 A1**
(43) Date de publication de la demande: **14.07.1999**
(21) Numéro de dépôt: 99400042.0
(22) Date de dépôt: 08.01.1999
(51) Int. Cl.: G01P 1/07, G01P 21/02, G01C 22/02, G01P 3/487, G07B 13/02, G07C 7/00

(54) **Procédé et dispositif de mesure antifraude de vitesse, véhicule et machine**

(30) Priorité: 09.01.1998 FR 9800166
(71) Demandeur: Legrand, Eric, 92310 Sevres (FR); Adoul, Mohammed, 45420 Bonny sur Loire (FR)
(72) Inventeur: Legrand, Eric, 92310 Sevres (FR); Adoul, Mohammed, 45420 Bonny sur Loire (FR)
(74) Mandataire: Derambure, Christian

(57) **Abrégé**

Procédé non intrusif de mesure antifraude de la vitesse de déplacement et/ou de la distance parcourue par un arbre (6), par exemple d'un véhicule (1), l'arbre (6) étant couplé en rotation à un organe de propulsion tel que moteur et/ou à un organe de transmission de mouvement tel que roue pour un véhicule routier (1).

Le procédé comprend les étapes prévoyant de :
a) le cas échéant étalonner au moins une grandeur d'un ou de plusieurs signaux de passage telle que durée et écart temporel entre deux de ces signaux et/ou occurrence ;
b) produire au moins un message indicatif de la mesure à effectuer, ce message comprenant au moins :
   * une première information indicative d'une position angulaire de référence sur l'arbre ; et
   * une deuxième information indicative d'une position angulaire décalée sur l'arbre.

## Description

L'invention concerne un procédé non intrusif de mesure antifraude de la vitesse de déplacement et/ou de la distance parcourue par un arbre.

L'invention concerne aussi un dispositif de mesure pour la mise en oeuvre du procédé, et un véhicule ou une machine dans lequel est mis en oeuvre ce procédé et/ou comportant ce dispositif.

Dans une application du procédé, l'arbre est celui d'une machine telle que machine-outil.

Dans cette application, est mesurée la vitesse de déplacement en rotation et/ou la distance parcourue en rotation par un point de l'arbre se trouvant à distance de son axe de rotation.

Dans une autre application, l'arbre est celui d'un véhicule.

Dans cette application, l'arbre est couplé en rotation à un organe de propulsion du véhicule tel que moteur et/ou à un organe de transmission de mouvement du véhicule.

Dans un exemple, le véhicule est un véhicule routier, comme une voiture automobile ou un camion.

L'organe de transmission de mouvement est alors par exemple une roue du véhicule routier.

La mesure doit être fournie par exemple à un taximètre, lorsque le véhicule routier est un taxi ou à un chronotachygraphe, lorsque le véhicule routier est un camion ou analogues.

Dans un autre exemple, le véhicule est destiné à se déplacer dans les airs ou sur mer.

L'organe de transmission de mouvement est alors pour un avion ou un bateau à hélice, leur hélice ou pour un hélicoptère, les pales de celui-ci.

Le document FR-A-2 715 490 propose d'éviter les fraudes dans un taxi équipé d'un taximètre ou dans un camion équipé d'un chronotachygraphe.

A cette fin, un capteur du taxi ou du camion, apte à détecter le nombre de tours effectués par une roue du taxi ou du camion, est relié à un système électronique de test de caractéristiques internes du capteur.

L'une de ces caractéristiques est le rapport cyclique des impulsions déduites des signaux alternatifs ou purement impulsionnels fournis par le capteur.

Le document FR-A-2 726 108 concerne un taximètre relié à un capteur de véhicule, ainsi qu'un procédé de protection du signal de ce capteur.

Citons également le document GB-A-1 570 288 qui décrit un système d'inhibition du fonctionnement d'un taximètre, par comparaison de phases obtenues par captage des mouvements de roue ou d'arbre de sortie.

Le document US-A-5 463 373 décrit un dispositif de vérification de mouvements.

Le document FR-A-2 703 492 décrit un adaptateur électronique pour taximètre et son procédé de calibrage.

Et le document FR-A-2 700 869 propose d'éviter les fraudes sur un taximètre associé à un capteur électronique de distance parcourue.

A cette fin, le capteur est relié à un compteur de vitesse et de distance kilométrique parcourue et à un taximètre par l'intermédiaire d'un boîtier inviolable.

Un inconvénient des techniques connues est la possibilité d'une falsification, notamment par l'intermédiaire du capteur, de la mesure et donc de la tarification dans le cas d'un taximètre.

Il existe certes des dispositifs de mesure, dans lesquels l'information de vitesse est prélevée par des fils électriques sur le compteur de vitesse du véhicule.

Toutefois, ces dispositifs dits intrusifs nécessitent une modification de la configuration interne du véhicule, ce qui n'est pas souhaité par les constructeurs. Et la coupure de ces fils empêche l'obtention de l'information de vitesse.

L'invention vise à remédier à ces inconvénients notamment, en assurant une excellente sécurité contre la fraude, et par exemple contre les modifications du capteur de vitesse.

Un premier objet de l'invention prévoit un procédé selon les revendications.

Un deuxième objet de l'invention est un dispositif non intrusif de mesure antifraude de la vitesse de déplacement et/ou de la distance parcourue par un arbre, selon les revendications.

Un troisième objet de l'invention est un véhicule, notamment un véhicule routier routier dans lequel est mis en oeuvre le procédé de mesure et/ou comportant le dispositif de mesure, selon les revendications.

Et un quatrième objet est une machine à arbre tournant telle que machine-outil, dans laquelle est mis en oeuvre le procédé de mesure et/ou comportant le dispositif de mesure, selon les revendications.

L'invention est maintenant décrite en détail et en référence aux figures, à titre d'exemple.

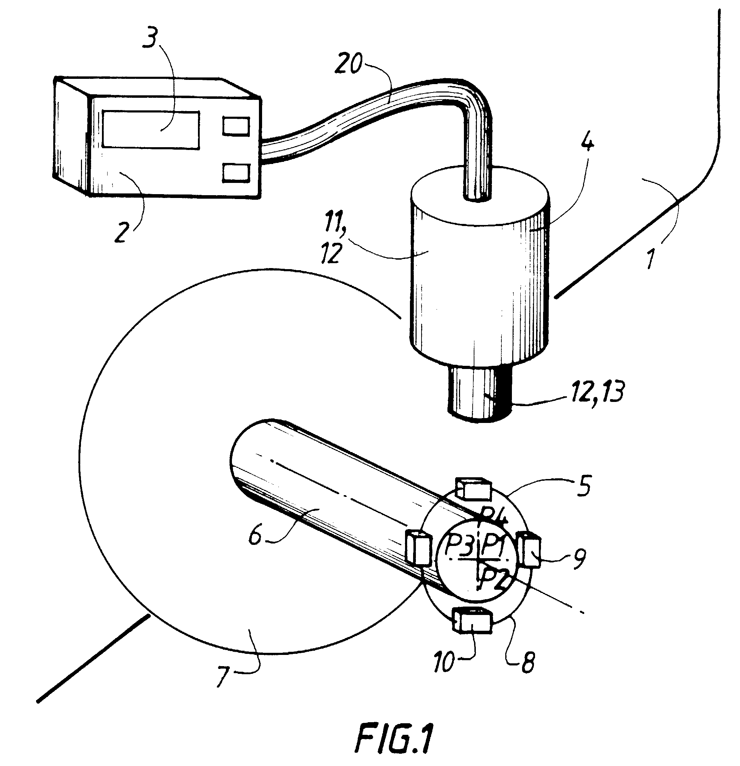

La figure 1 représente schématiquement un dispositif de mesure de vitesse selon l'invention, monté sur un véhicule routier muni d'un taximètre.

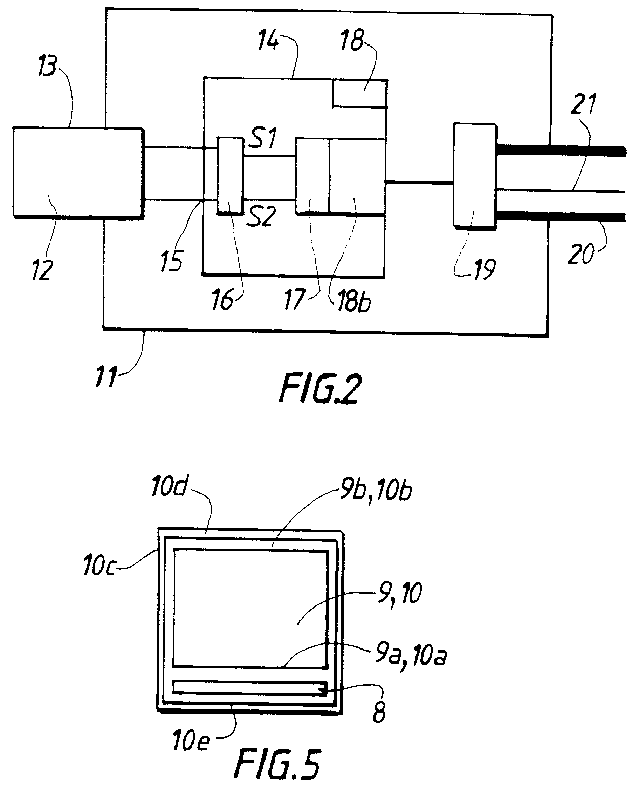

La figure 2 représente schématiquement la structure interne du dispositif de mesure selon l'invention.

La figure 3 est un organigramme du procédé de mesure de la vitesse mis en oeuvre selon l'invention.

La figure 4 représente schématiquement des chronogrammes, des signaux électriques de synchronisation et de passage obtenus à la suite de l'étape de captage.

La figure 5 représente, en coupe transversale radiale par rapport à l'arbre du véhicule, le moyen de fixation d'un émetteur d'impulsion du dispositif à l'arbre.

La description est effectuée en référence à un véhicule routier 1.

Il va de soi que l'invention peut également être appliquée à d'autres moyens de locomotion, par exemple dans les airs ou sur mer.

Dans la réalisation représentée, le véhicule routier est une voiture automobile, par exemple un taxi ou une voiture de location, ou un camion ou analogues.

Le véhicule routier 1 est équipé d'un appareil 2 destiné à recevoir une mesure de vitesse, de temps de parcours, ou de distance parcourue par le véhicule.

Dans le cas d'un camion, l'appareil 2 est par exemple un chronotachygraphe.

Dans le cas d'un taxi, l'appareil 2 est un taximètre ou un horokilométreur.

Dans le cas d'un véhicule de location, l'appareil 2 est destiné à enregistrer la distance parcourue par le véhicule.

Dans ce qui suit, la description est effectuée en référence à un taximètre 2. Le taximètre est monté à proximité du tableau de bord du taxi.

Le taximètre 2 comporte un écran 3 de visualisation du prix facturé pour la course effectuée.

Le taximètre 2 est connecté à un dispositif 4 destiné à fournir une grandeur de mesure de la vitesse du véhicule et/ou de la distance parcourue par le véhicule.

Le dispositif 4 de mesure comporte un émetteur 5 d'impulsions monté solidaire en rotation d'un arbre 6 du véhicule.

Dans la réalisation représentée, l'arbre 6 est celui d'une roue 7 du véhicule.

Dans d'autres réalisations, non représentées, l'arbre 6 est couplé par l'intermédiaire d'un engrenage à l'arbre d'une roue du véhicule.

Dans d'autres réalisations, non représentées, l'arbre est couplé en rotation à un organe de propulsion du véhicule, par exemple au moteur de celui-ci.

L'émetteur 5 est fixé à l'arbre 6 par tout moyen approprié.

Dans la réalisation représentée, l'émetteur 5 comporte un collier 8 serré rigidement autour de l'arbre 6.

Dans une autre réalisation, l'émetteur 5 comporte un serre-joint ou analogue permettant de fixer l'émetteur à l'arbre 6.

L'émetteur 5 est apte à produire un message indicatif de la mesure à fournir.

Ce message comporte au moins une première information indicative d'une première position angulaire P1 de référence de l'arbre et une deuxième information indicative d'une deuxième position angulaire P2 de l'arbre 6.

Les positions angulaires sont par exemple réparties équiangulairement sur la périphérie de l'arbre 6.

Dans la réalisation représentée, l'émetteur est apte à produire un message comprenant des première, deuxième, troisième et quatrième informations indicatives respectivement d'une position angulaire de référence P1, et de deuxième, troisième et quatrième positions angulaires P2, P3, P4 sur l'arbre 6.

Les positions angulaires P1 - P4 sont réparties à sensiblement 90° l'une de l'autre.

Dans la réalisation représentée, l'émetteur 5 comporte un aimant par information indicative d'une position angulaire sur l'arbre 6.

Un aimant 9 est orienté de manière distincte, par exemple inverse des autres 10 par rapport à l'arbre 6.

Cet aimant 9 est destiné à fournir l'information indicative de la position de référence P1.

Tandis que les aimants 10 sont destinés à fournir les deuxième, troisième et quatrième informations indicatives respectivement des deuxième, troisième et quatrième positions angulaires P2, P3, P4 sur l'arbre 6.

Les aimants 10 présentent sensiblement la même orientation par rapport à l'arbre 6.

Par exemple, l'aimant 9 présente un pôle nord vers l'extérieur, tandis que les autres aimants 10 présentent un pôle sud vers l'extérieur.

Dans une autre réalisation, l'aimant 9 présente un pôle sud vers l'extérieur, tandis que les autres aimants 10 présentent un pôle nord vers l'extérieur.

Les aimants 9, 10 sont fixés au collier 8 par tout moyen approprié, par exemple par collage.

Dans un exemple représenté à la figure 5, les aimants 9, 10 sont de forme parallélépipédique rectangulaire ou cubique.

Ils comportent une face 9a, 10a intérieure tournée vers l'arbre 6 et le collier 8 et une face 9b, 10b, opposée, tournée vers l'extérieur.

L'aimant 9, 10 et le collier 8 sont entourés transversalement par une attache 10c de forme intérieure complémentaire.

L'aimant 9 est fixé à une face 10d intérieure de l'attache 10c par sa face 9b, 10b.

L'attache 10c et l'aimant 9, 10 sont immobilisés par rapport au collier par plaquage de la branche 10e de l'attache 10c, se trouvant à l'intérieur du collier 8, contre le côté intérieur du collier 8 et sur la périphérie de l'arbre 6.

Le plaquage est obtenu par exemple par serrage du collier 8 autour de l'arbre 6.

La distance comprise entre la face extérieure 10d et la branche intérieure 10e de l'attache est supérieure à la somme de l'épaisseur du collier 8 et de la distance entre les faces intérieure et extérieure 9a, 10a et 9b, 10b.

Cela permet d'enfiler les attaches avec les aimants sur le collier avant son serrage.

Le dispositif 4 comporte un boîtier 11 ou capsule fixé au véhicule 1, par exemple à sa caisse.

Le boîtier 11 est par exemple métallique et comporte un corps 12 de forme extérieure cylindrique circulaire.

Le dispositif 4 comprend un capteur 12 ou une association de capteurs, apte à détecter la présence et l'absence des première et deuxième informations indicatives fournies par l'émetteur 5.

Le capteur 12 est tel qu'il fournit des informations relevées différentes, selon qu'il se trouve en regard d'un aimant 9, d'un aimant 10 ou d'aucun aimant.

Ces informations relevées sont par exemple une tension ou un courant électrique, notamment du type de pics ou d'impulsions, éventuellement après une transformation.

Le boîtier 11 comporte un compartiment 13, faisant saillie du corps 12, par exemple d'une surface de base du corps 12.

Le compartiment 13 est destiné au logement du capteur 12.

Le boîtier 11 est fixé au véhicule 1, de manière que le capteur 12 est tourné vers l'arbre 6, en regard et à distance de l'émetteur 5.

Le capteur 12 est par exemple un capteur à effet Hall.

Dans la réalisation représentée, le capteur 12 est un capteur magnéto-résistif.

Dans une réalisation, le capteur 12 est linéaire.

Le dispositif de mesure 4 comprend par ailleurs une unité centrale 14.

L'unité centrale comporte une horloge tel qu'oscillateur et est reliée à une alimentation en énergie électrique, non représentées.

Dans une réalisation, l'alimentation est la batterie du véhicule.

Dans une autre réalisation, l'alimentation est un accumulateur ou une pile.

L'unité centrale 14 est logée dans le boîtier 11, par exemple dans le corps 12.

Le capteur 12 et l'unité centrale sont noyés dans une résine remplissant le boîtier 11.

L'unité centrale 14 est reliée au capteur 12 par des conducteurs électriques 15.

L'unité 14 comporte des moyens de traitement 16 des première et deuxième informations relevées.

Les informations relevées par le capteur 12 sont transmises à l'unité centrale 14 et aux moyens de traitement 16 par l'intermédiaire des conducteurs 15.

Les moyens 16 de traitement sont aptes à fournir un premier signal électrique de synchronisation S1 indicatif de la première information relevée et un deuxième signal électrique de passage S2 indicatif de la deuxième information relevée.

Le signal électrique de synchronisation S1 correspond au passage d'un aimant 9, indicatif de la position angulaire P1 de référence, devant le capteur 12.

Le deuxième signal électrique de passage S2 correspond au passage des aimants 9 et 10, indicatifs des positions angulaires P1, P2, P3, P4, devant le capteur 12.

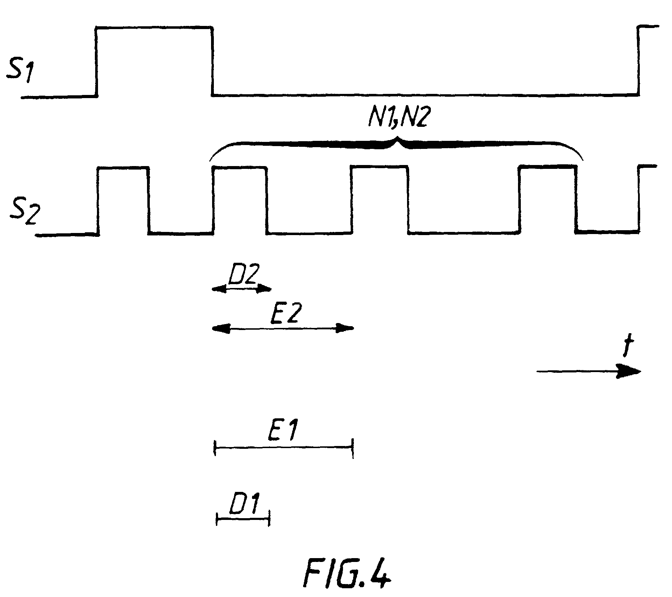

Les signaux de synchronisation et de passage S1, S2 sont par exemple impulsionnels, comme le montre la figure 4.

Les signaux de synchronisation et/ou de passage S1, S2 sont par exemple un état haut ou une impulsion positive.

Dans une autre réalisation, les signaux de passage et/ou de synchronisation S2, S1 sont par exemple un état bas ou une impulsion négative.

L'unité centrale 14 comporte également des moyens de discrimination 17 et une mémoire d'étalonnage 18.

Une grandeur de comparaison est entrée avant une mesure dans la mémoire 18.

La mémoire 16 est par exemple non volatile.

Dans un exemple, l'étalonnage est effectué, de manière à obtenir une vitesse de déplacement constante prédéterminée.

Cette vitesse correspond par exemple à un déplacement du véhicule à 50 km/h.

Il est alors provoqué la saisie en mémoire 16, pour cette vitesse, des grandeurs correspondantes déterminées par le procédé.

Le cas échéant, l'étalonnage peut être répété, par exemple trois fois au plus. Cela permet de ménager trois essais d'étalonnage.

Dans une réalisation, la grandeur de comparaison entrée dans la mémoire est une durée D1 d'un signal de passage et l'écart temporel E1 entre deux signaux de passage déterminés, par exemple entre deux signaux de synchronisation S1 consécutifs.

Dans cette réalisation, les moyens de discrimination 17 sont aptes à comparer l'écart E2 entre deux signaux de passage déterminés fournis par les moyens de traitement 16 avec l'écart étalonné E1.

Si cet écart E2 est égal à l'écart étalonné E1, il est effectué par les moyens 17 de discrimination une comparaison de la durée D2 d'un deuxième signal électrique fourni par les moyens de traitement 16 avec la durée D1 étalonnée d'un signal de passage.

En variante ou en supplément, il est entré dans la mémoire d'étalonnage 16 un nombre ou occurrence étalonné N1 de signaux de passage.

Dans ce cas, il est comparé par les moyens de discrimination 17, si le nombre N2 de signaux S2 de passage fournis par les moyens de traitement 16 et apparaissant entre deux signaux de synchronisation S1 fournis par les moyens de traitement 16 est égal au nombre étalonné N1.

Les moyens de discrimination 17 sont aptes à déterminer l'un de deux états de validation et de refus de la mesure.

Dans l'état de validation de la mesure, la grandeur des signaux de passage étalonnés, c'est-à-dire la durée étalonnée D1 d'un signal de passage et/ou l'occurrence étalonnée N1, concorde sensiblement avec la grandeur des signaux de passage fournis par les moyens de traitement 16, c'est-à-dire avec la durée D2 et/ou avec l'occurrence N2.

Dans l'état de refus, la grandeur des signaux de passage étalonnés et la grandeur des signaux de passage traités ne concordent pas.

Cet état de refus peut également être provoqué, lorsque la vitesse mesurée dépasse une vitesse autorisée.

L'unité centrale 14 comporte en outre un générateur 18b de signal de mesure.

Le générateur 18b est tel qu'il détermine et fournit un signal de mesure de la vitesse et/ou de la distance parcourue, si un état de validation est déterminé.

Ce signal est calculé à partir de l'écart entre deux signaux de passage traités déterminés, par exemple consécutifs et/ou à partir de la durée d'un signal de passage traité déterminé et/ou à partir de l'écart entre deux signaux de synchronisation traités déterminés, par exemple consécutifs.

Le générateur 18b est tel qu'il inhibe la détermination et la fourniture de valeur de mesure, si un état de refus de mesure est déterminé.

En variante ou en supplément, le générateur fournit un signal de défaut par exemple d'avertissement de fraude et/ou de blocage d'une fonction du véhicule.

Cette fonction est par exemple l'affichage sur l'écran 3 du taximètre 2 du prix facturé pour la course effectuée.

Le signal de défaut peut, en variante, provoquer le passage en taux horaire du taximètre.

Le dispositif 4 de mesure comporte une unité d'adaptation 19 de signaux de mesure, connectée au générateur 18b.

Le dispositif 4 de mesure comporte une gaine 20 blindée et inviolable de connexion au taximètre.

Dans la gaine 20 passent des conducteurs électriques pour l'alimentation en énergie du dispositif 4 de mesure, notamment de l'unité centrale 14 et de l'unité d'adaptation 19.

Un unique conducteur électrique 21 est par exemple prévu dans la gaine pour la sortie sécurisée, à partir de l'unité d'adaptation 19 et de l'unité centrale 14, de la grandeur de mesure et pour sa fourniture au taximètre.

L'alimentation en énergie du dispositif 4 et du taximètre est effectuée par exemple à partir du circuit électrique ou de la batterie du véhicule 1.

Dans une variante, non représentée, cette alimentation est effectuée par une pile ou un accumulateur prévu dans le dispositif 4.

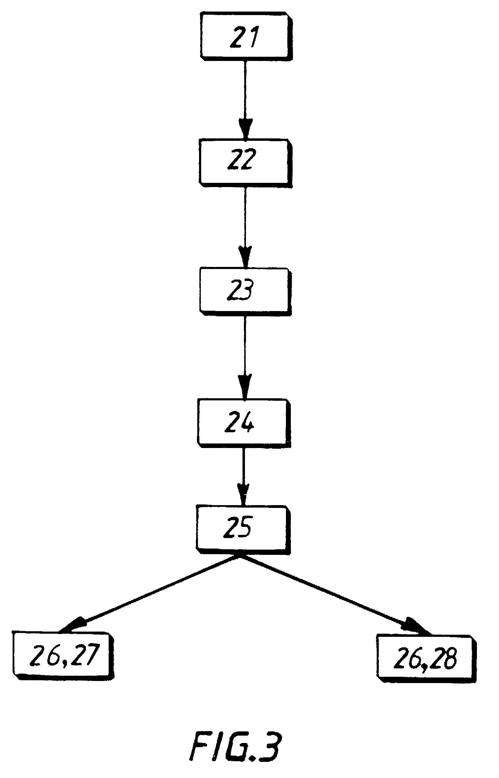

Le dispositif 4 de mesure met en oeuvre les étapes opératoires suivantes, décrites en référence à la figure 3.

Une première étape 21 prévoit, le cas échéant, d'étalonner au moins une grandeur d'un ou de plusieurs signaux de passage telle que durée D1 et écart temporel E1 entre deux de ces signaux et/ou occurrence N1.

Cette étape 21 d'étalonnage est prévue lors de la mise en service, de la révision ou du contrôle du véhicule 1.

Dans une réalisation, du moins une partie de l'étalonnage est figé en usine.

Une deuxième étape 22 prévoit de produire au moins le message indicatif de la mesure à effectuer.

Cette étape de production est mise en oeuvre par l'émetteur 5.

Une deuxième étape 22 prévoit de capter le message, de manière à relever la présence des première et deuxième informations, éventuellement lors d'une transformation du message en signal électrique.

Cette étape 22 de captage est mise en oeuvre par le capteur 12.

Une troisième étape 23 prévoit de traiter, les première et deuxième informations relevées, de manière à obtenir au moins un premier signal électrique de synchronisation indicatif de la première information, et un deuxième signal électrique de passage indicatif de la deuxième information.

Cette étape de traitement 24 est mise en oeuvre par les moyens de traitement 16 de l'unité centrale 14.

Une quatrième étape 25 prévoit de discriminer, par comparaison avec le signal de passage étalonné, au moins une grandeur d'au moins un deuxième signal électrique traité telle que son occurrence entre deux premiers signaux électriques de synchronisation et/ou sa durée, lorsque l'écart entre deux signaux de passage traités est sensiblement égal à l'écart temporel étalonné, entre :
* l'état de validation de la mesure tel que la grandeur des signaux de passage étalonnés et la grandeur des signaux de passage traités concordent sensiblement ; et
* l'état de refus de la mesure tel que la grandeur des signaux de passage étalonnés et la grandeur des signaux de passage traités ne concordent pas.

Une cinquième étape de décision 26 prévoit de :
- pour un état de validation, déterminer et fournir au cours d'une étape 27 de validation, un signal de mesure de la vitesse et/ou de la distance ;
- pour un état de refus, au cours d'une étape 28 de refus, inhiber la détermination et la fourniture du signal de mesure et/ou fournir un signal de défaut par exemple d'avertissement de fraude et/ou de blocage d'une fonction du véhicule.

Cette étape 26 de décision et cette étape de validation 27 ou de refus 28 sont mises en oeuvre par le générateur 18 de signal de mesure.

Il est prévu de éventuellement recommencer les étapes précédentes de production 22, de captage 23, de traitement 24, de discrimination 25, de décision 26, de validation 27 ou de refus 28.

Le procédé de mesure est démarré par exemple par une commande du taximètre 2 ou par la mise sous tension du taximètre ou par le démarrage du véhicule 1.

## Revendications

1. Procédé non intrusif de mesure antifraude de la vitesse de déplacement et/ou de la distance parcourue par un arbre (6), par exemple d'un véhicule (1), l'arbre (6) étant couplé en rotation àun organe de propulsion tel que moteur et/ou à un organe de transmission de mouvement tel que roue pour un véhicule routier (1) ;
caractérisé en ce qu'il comprend les étapes prévoyant de :
a) le cas échéant étalonner au moins une grandeur d'un ou de plusieurs signaux de passage telle que durée et écart temporel entre deux de ces signaux et/ou occurrence ;
b) produire au moins un message indicatif de la mesure à effectuer, ce message comprenant au moins :
* une première information indicative d'une position angulaire de référence sur l'arbre ; et
* une deuxième information indicative d'une position angulaire décalée sur l'arbre ;
c) capter le message, de manière à relever la présence des première et deuxième informations, éventuellement lors d'une transformation du message en signal électrique ;
d) traiter, les première et deuxième informations relevées, de manière à obtenir au moins un premier signal électrique de synchronisation (S1) indicatif de la première information, et un deuxième signal électrique de passage (S2) indicatif de la deuxième information ;
e) discriminer, par comparaison avec le signal de passage étalonné, au moins une grandeur d'au moins un deuxième signal électrique traité telle que son occurrence entre deux premiers signaux électriques de synchronisation (S1) et/ou sa durée, lorsque l'écart entre deux signaux de passage traités est sensiblement égal à l'écart temporel étalonné, entre :
* un état de validation de la mesure tel que la grandeur des signaux de passage étalonnés et la grandeur des signaux de passage traités concordent sensiblement ; et
* un état de refus de la mesure tel que la grandeur des signaux de passage étalonnés et la grandeur des signaux de passage traités ne concordent pas ;
f) au cours d'une étape de décision,
- pour un état de validation, déterminer et fournir un signal de mesure de la vitesse et/ou de la distance ;
- pour un état de refus, inhiber la détermination et la fourniture du signal de mesure et/ou fournir un signal de défaut par exemple d'avertissement de fraude et/ou de blocage d'une fonction du véhicule ; et
g) éventuellement recommencer les étapes précédentes.

2. Procédé selon la revendication 1, caractérisé en ce qu'il est mis en oeuvre dans un véhicule (1) tel que taxi pour fournir à un taximètre un signal de mesure permettant une tarification d'une course effectuée par le véhicule (1), ou tel qu'un camion ou analogues pour fournir un signal de mesure à un chronotachygraphe afin de permettre un contrôle des distances et vitesses du véhicule.

3. Procédé selon l'une quelconque des revendications 1 et 2, caractérisé en ce que l'étape d'étalonnage est effectuée lors de la mise en service, de la révision ou du contrôle du véhicule (1).

4. Procédé selon l'une quelconque des revendications 1 à 3, caractérisé en ce que les étapes de production (b), de captage (c), de traitement (d), de discrimination (e), de décision (f) et de recommencement (g), sont mises en oeuvre successivement, tant que le véhicule (1) est en déplacement et/ou tant que la mesure est souhaitée.

5. Procédé selon l'une quelconque des revendications 1 à 4, caractérisé en ce que le message indicatif de la mesure à effectuer produit lors de l'étape (b) est magnétique.

6. Procédé selon l'une quelconque des revendications 1 à 5, caractérisé en ce que l'étape c) de captage est effectuée par effet Hall.

7. Procédé selon l'une quelconque des revendications 1 à 6, caractérisé en ce que lors de l'étape c) de captage, si aucune des première et deuxième informations n'est relevée, une phase de mise en attente temporisée est effectuée, à l'issue de laquelle si aucune présence des première et deuxième informations n'est à nouveau captée, la phase d'attente est recommencée ou, si cette présence est relevée, le procédé est repris.

8. Procédé selon l'une quelconque des revendications 1 à 7, caractérisé en ce que les première et deuxième informations relevées sont traitées, au cours de l'étape d), de manière à obtenir des premier et/ou deuxième signaux électriques de type impulsionnel.

9. Procédé selon l'une quelconque des revendications 1 à 8, caractérisé en ce que l'étape e) comprend la discrimination de grandeur du signal de passage traité, à la fois de durée et d'occurrence.

10. Procédé selon l'une quelconque des revendications 1 à 9, caractérisé en ce que lors de l'étape f) de discrimination et en état de validation, le signal de mesure de la vitesse et/ou de la distance est déterminé à partir de l'écart entre deux signaux de passage déterminés, par exemple consécutifs et/ou à partir de la durée d'un signal de passage et/ou à partir de l'écart entre deux signaux de synchronisation déterminés, par exemple consécutifs.

11. Dispositif non intrusif de mesure antifraude de la vitesse de déplacement et/ou de la distance parcourue par un arbre (6), par exemple d'un véhicule (1), l'arbre (6) étant couplé en rotation à un organe de propulsion tel que moteur et/ou à un organe de transmission de mouvement tel que roue pour un véhicule routier (1) ;
caractérisé en ce qu'il comprend :
a) une mémoire (18) d'étalonnage d'au moins une grandeur d'un ou plusieurs signaux de passage telle que durée d'un signal de passage et l'écart temporel entre deux signaux de passage et/ou occurrence ;
b) un émetteur (5), destiné à être fixé à l'arbre (6) et apte à produire au moins un message indicatif de la mesure à fournir, avec au moins :
* une première information indicative d'une position angulaire de référence de l'arbre ;
* une deuxième information indicative d'une position angulairedécalée sur l'arbre ;
c) au moins un capteur (12) ou une association de capteurs, apte à détecter la présence des première et deuxième informations ;
d) une unité centrale (14) comportant:
* des moyens de traitement (16) des première et deuxième informations relevées, aptes à fournir au moins un premier signal électrique de synchronisation (S1) indicatif de la première information, et un deuxième signal électrique de passage (S2) indicatif de la deuxième information ;
* des moyens de discrimination (17) tels que comparateurs, aptes à comparer avec le signal de passage étalonné, au moins une grandeur d'au moins un deuxième signal électrique traité, telle qu'occurrence entre deux premiers signaux électriques de synchronisation et/ou sa durée, lorsque l'écart entre deux signaux de passage traités est sensiblement égal à l'écart étalonné, les moyens de discrimination (17) étant aptes à déterminer l'un des deux états :
- un état de validation de la mesure tel que la grandeur des signaux de passage étalonnés et la grandeur des signaux de passage traités concordent sensiblement ;
- un état de refus de la mesure tel que la grandeur des signaux de passage étalonnés et la grandeur des signaux de passage traités ne concordent pas ;
* un générateur (18b) de signal de mesure en sortie, agencé de manière à déterminer et à fournir un signal de mesure de la vitesse et/ou de la distance, lorsque les moyens de discrimination (17) se trouvent en état de validation, et à inhiber la détermination et la fourniture du signal de mesure et/ou à fournir un signal de défaut par exemple d'avertissement de fraude et/ou de blocage d'une fonction du véhicule, lorsque les moyens de discrimination (17) se trouvent en état de refus,
la mémoire d'étalonnage (18), le capteur (12) et l'unité centrale (14) étant destinés à être fixés au véhicule (1), par exemple à sa caisse.

12. Dispositif selon la revendication 11, caractérisé en ce qu'il est destiné à la mise en oeuvre d'un procédé selon l'une quelconque des revendications 1 à 10.

13. Dispositif selon l'une quelconque des revendications 11 et 12, caractérisé en ce que l'émetteur (5) comprend au moins deux aimants (9, 10) destinés à être fixés à l'arbre (16) et orientés en polarité de manière inverse l'un de l'autre par rapport à l'arbre (6) lorsqu'ils y sont fixés, le capteur (12) étant de type à effet Hall, par exemple magnéto-résistif, et les aimants (9, 10) passant devant ce capteur (12) lorsque l'arbre (6) est mis en rotation.

14. Dispositif selon l'une des revendications 11 à 13, caractérisé en ce que l'émetteur (5) est destiné à être rendu rigidement solidaire en rotation de l'arbre (6) par un collier (8) ou analogues par exemple inviolable.

15. Dispositif selon l'une quelconque des revendications 13 et 14, caractérisé en ce que des constituants de l'émetteur (5) tels qu'aimants (9, 10) sont disposés équiangulairement sur la périphérie de l'arbre (6), sur lequel ils sont destinés à être fixés.

16. Dispositif selon l'une quelconque des revendications 11 à 15, caractérisé en ce que la mémoire (18), le capteur (12) et l'unité centrale (14) du dispositif sont enfermés dans une capsule (11), par exemple inviolable, en étant par exemple noyés dans une résine remplissant la capsule (11).

17. Dispositif selon la revendication 16, caractérisé en ce que le générateur (19) de signal de mesure comporte au moins un fil (21) de sortie destiné à être connecté à un taximètre ou à un chronotachygraphe, par exemple blindé et dépassant de la capsule, deux des fils étant reliés à une source d'énergie, via un taximètre ou un chronotachygraphe, telle que circuit d'alimentation et/ou batterie du véhicule.

18. Véhicule, notamment véhicule routier, dans lequel est mis en oeuvre le procédé selon l'une quelconque des revendications 1 à 10 et/ou comportant un dispositif selon l'une quelconque des revendications 11 à 17, caractérisé en ce qu'il comporte un taximètre ou un chronotachygraphe ou analogues.

19. Machine à arbre tournant telle que machine-outil, dans laquelle est mis en oeuvre le procédé selon l'une quelconque des revendications 1 à 10 et/ou comportant un dispositif selon l'une quelconque des revendications 11 à 17.
